(19) Europäisches Patentamt / European Patent Office / Office européen des brevets

(11) **EP 1 801 705 A1**

(12) **DEMANDE DE BREVET EUROPEEN**

(43) Date de publication:
**27.06.2007 Bulletin 2007/26**

(51) Int Cl.:
*G06F 17/10* $^{(2006.01)}$

(21) Numéro de dépôt: **06354043.9**

(22) Date de dépôt: **21.12.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **22.12.2005 FR 0513190**

(71) Demandeur: **PraxValue
38000 Grenoble (FR)**

(72) Inventeur: **Oustry, François
38000 Grenoble (FR)**

(74) Mandataire: **Jouvray, Marie-Andrée et al
Cabinet Hecké
World Trade Center - Europole
5, place Robert Schuman
B.P. 1537
F-38025 Grenoble Cedex 1 (FR)**

(54) **Dispositif de synthèse d'un signal numérique composite avec contrôle explicite de ses trois premiers moments**

(57) Le dispositif détermine les coefficients de pondération ($w_1$ à $w_N$) à appliquer à N signaux numériques sources ($s_1$ à $s_N$) pour former un signal composite s(w). Les moments d'ordre 1 à 3 du signal composite doivent présenter respectivement des caractéristiques de valeur moyenne, de variance et d'asymétrie prédéfinies par un utilisateur. Le dispositif introduit une variable supplémentaire, sous forme d'une matrice de pondération W. Le vecteur w étant le vecteur des coefficients de pondération et $W^T$ le transposé du vecteur w, la différence $W-ww^T$ est une matrice semi-définie positive. Par ailleurs, le dispositf réalise une linéarisation, autour d'un vecteur $w_{ref}$ de coefficients de pondération de référence, de la contrainte d'asymétrie sur les moments d'ordre 3 en utilisant comme autre variable intermédiaire une matrice

$$A = \begin{bmatrix} W & w \\ w^T & 1 \end{bmatrix}.$$

Figure 1

**Description**

**Domaine technique de l'invention**

L'invention concerne un dispositif de synthèse d'un signal composite à partir d'une pluralité de signaux numériques sources, constitués par des échantillons de mesure des signaux à traiter, comportant des moyens de détermination de coefficients de pondération à appliquer aux signaux numériques sources pour que le signal composite vérifie des contraintes de valeur moyenne et d'asymétrie prédéfinies par un utilisateur et dispose d'une variance minimale.

**État de la technique**

Les trois premiers moments (valeur moyenne, variance et asymétrie) d'un signal numérique constituent des éléments déterminants des propriétés physiques de ce signal. C'est notamment le cas pour les signaux numériques utilisés pour la synthèse d'images, de signaux vidéo, de sons, pour la synthèse de signaux radio, pour l'analyse de propriétés d'une molécule en chimie moléculaire par synthèse d'un signal approchant la densité de présence des particules (fermions, électrons, ions), etc.

Les dispositifs de synthèse usuels, généralement intégrés dans un processeur de signaux numériques (DSP), permettent généralement de produire une combinaison de signaux sources telle que la variance du signal composite soit minimale, avec la contrainte d'une moyenne supérieure ou égale à une quantité spécifiée par l'opérateur de la synthèse. En revanche, la spécification d'une contrainte sur le troisième moment, ou contrainte d'asymétrie positive, sur le signal de sortie conduit à un problème d'optimisation non convexe, dont la résolution par les approches directes usuelles conduit à des résultats très instables et, a priori, sans garantie sur la durée de la synthèse.

À titre d'exemples, diverses techniques de synthèse de signaux numériques ont été proposées, dans différents domaines techniques dans les articles suivants:

- dans le domaine de la chimie moléculaire ou de la chimie quantique, les articles "Dynamics of a two-mode Bose-Einstein condensate beyond mean field theory", de J.R. Anglin et al., ITAMP, Harvard-Smithsonian Center for Astrophysics, 60 Garden Street, Cambridge MA 02138, (25 octobre 2005) et "The Reduced Density Matrix Method for Electronic Structure Calculations and the Role of Three-Index Representability", de Z. Zhao et al., Journal of Chemical Physics 120 (2004), pp. 2095-2104.
- dans le domaine des automatismes, l'article "A cone complementary linearization algorithm for static output-feedback and related problems", de L. El Ghaoui, F. Oustry, et M. Aït Rami, IEEE Trans. Autom. & Control, 42(8), août 1997.
- dans le domaine du traitement de signal, l'article "Boundary filter optimization for segmentation-based subband coding", d'Alfred Mertins, IEEE Trans. Signal Processing, vol. 49, no. 8, pp. 1718-1727, Aug. 2001.

**Objet de l'invention**

L'invention a pour but un dispositif ne présentant pas les inconvénients de l'art antérieur et, plus particulièrement, un dispositif permettant, dans des délais raisonnables, d'obtenir un vecteur de coefficients de pondération d'un signal composite qui soit stable, même en présence de perturbations (bruit, perturbations générées par des tests,...) des signaux sources.

Selon l'invention, ce but est atteint par le fait que le dispositif comporte des moyens de détermination des moments d'ordre 1 à 3 des signaux numériques sources et des moyens de détermination des coefficients de pondération à partir desdits moments des signaux sources et des contraintes prédéfinies de valeur moyenne et d'asymétrie du signal composite, les moyens de détermination des coefficients de pondération comportant

- des moyens d'introduction d'une variable supplémentaire, sous forme d'une matrice de pondération W, telle que, w étant le vecteur des coefficients de pondération et $w^T$ le transposé du vecteur w, la différence $W - ww^T$ soit une matrice semi-définie positive, et
- des moyens de linéarisation, autour d'un vecteur $W_{ref}$ de coefficients de pondération de référence, de la contrainte d'asymétrie sur le signal composite en utilisant comme autre variable intermédiaire une matrice A =

$$\begin{bmatrix} W & w \\ w^T & 1 \end{bmatrix}.$$

**Description sommaire des dessins**

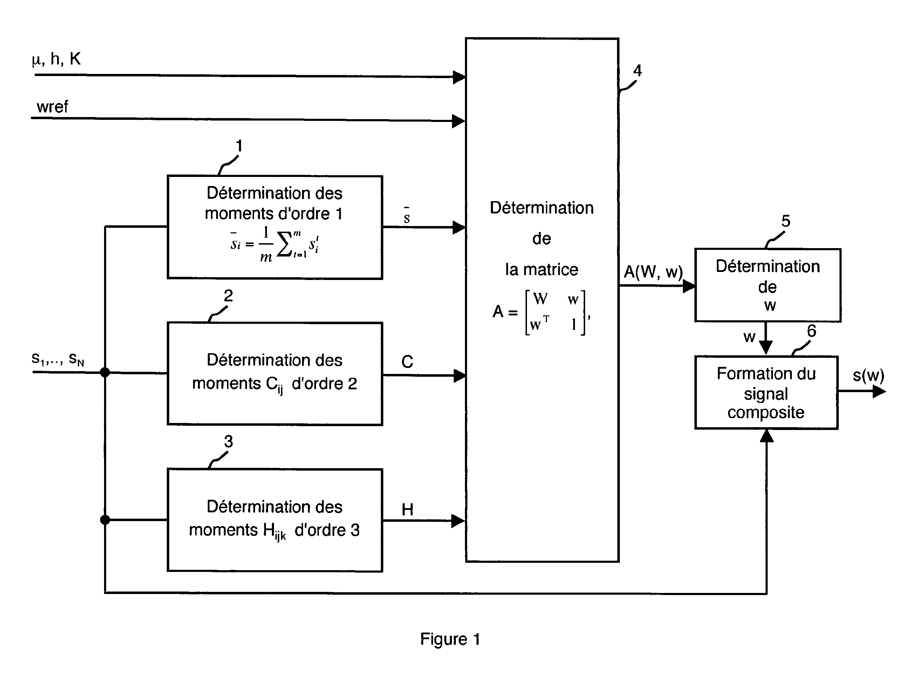

D'autres avantages et caractéristiques ressortiront plus clairement de la description qui va suivre d'un mode particulier de réalisation de l'invention donné à titre d'exemple non limitatif et représenté aux dessins annexés, dans lesquels la figure 1 (figure unique) illustre, sous forme de schéma-bloc, un mode particulier de réalisation d'un dispositif de synthèse selon l'invention.

**Description d'un mode particulier de réalisation.**

Le dispositif de synthèse selon la figure 1 a pour but la synthèse d'un signal composite $s(w)$ présentant une variance minimale, tout en vérifiant des contraintes imposant des valeurs de borne inférieure à la moyenne et à la caractéristique d'asymétrie du signal composite. Le signal composite $s(w)$ est formé à partir de N signaux sources numériques $S_1$ à $S_N$, auxquels sont respectivement appliqués des coefficients de pondération optimaux $w_1$ à $w_N$ à déterminer.

Pour $i = 1,..., N$, chaque signal $S_i$, constitué par m échantillons $S_i^1$ à $S_i^m$, peut être représenté sous la forme du vecteur suivant :

$$S_i = \begin{bmatrix} s_i^1 \\ \vdots \\ s_i^t \\ \vdots \\ s_i^m \end{bmatrix}$$

avec un indice de discrétion temporelle $t = 1,..., m$. Les échantillons des signaux numériques sources peuvent représenter diverses grandeurs en fonction du domaine d'application considéré. Ces grandeurs représentent des grandeurs physiques qui peuvent notamment être utilisées dans le domaine de la synthèse d'images, dans la synthèse de signaux radio, dans l'analyse de molécules en chimie moléculaire, etc.

De manière analogue, l'ensemble des coefficients de pondération $W_1$ à $W_N$ peut être représenté sous la forme d'un vecteur de coefficients de pondération w :

$$w = \begin{bmatrix} w_1 \\ \vdots \\ w_i \\ \vdots \\ w_N \end{bmatrix}$$

dans lequel les coefficients de pondération $w_i$ sont des réels positifs, tels que leur somme soit égale à 1, soit $\sum_{i=1}^{N} w_i = 1$.

Le signal composite à synthétiser est alors défini par m échantillons $S^t(w)$, tels que:

$$s^t(w) = \sum_{i=1}^{N} w_i s_i^t$$

avec $t = 1,...,m$.

Comme représenté sur la figure 1, les signaux sources numériques $S_i$ sont appliqué à l'entrée d'un bloc 1 de détermination des moments $\overline{S_i}$ d'ordre 1 des signaux sources. Le moment d'ordre 1 d'un vecteur $S_i$, représentatif de la

moyenne des m échantillons du vecteur correspondant, est classiquement donné par l'équation :

$$\bar{s}_i = \frac{1}{m} \sum_{t=1}^{m} s_i^t$$

L'ensemble des moments d'ordre 1 des signaux sources peut alors être représenté sous la forme d'un vecteur s de moments d'ordre 1 :

$$\bar{s} = \begin{bmatrix} \bar{s}_1 \\ \vdots \\ \bar{s}_i \\ \vdots \\ \bar{s}_N \end{bmatrix}$$

Simultanément, les signaux sources numériques $s_i$ sont appliqués à l'entrée d'un bloc 2 de détermination des moments $C_{ij}$ d'ordre 2 des signaux sources, classiquement donnés par l'équation :

$$C_{ij} = \frac{1}{m} \sum_{t=1}^{m} \left( s_i^t - \bar{s}_i \right)\left( s_j^t - \bar{s}_j \right)$$

avec i=1,..., N et j=1,...,N

L'ensemble des moments $C_{ij}$ d'ordre 2, centrés, peut, classiquement, être représenté sous la forme d'une matrice de covariance C, de taille NxN :

|       | $S_1$    |  | $S_i$    |  |  | $S_j$    | $S_N$    |
|-------|----------|--|----------|--|--|----------|----------|
| $S_1$ | $C_{11}$ |  | $C_{i1}$ |  |  | $C_{j1}$ | $C_{N1}$ |
|       |          |  |          |  |  |          |          |
| $S_i$ | $C_{1i}$ |  | $C_{ii}$ |  |  | $C_{ji}$ | $C_{Ni}$ |
|       |          |  |          |  |  |          |          |
|       |          |  |          |  |  |          |          |
| $S_j$ | $C_{1j}$ |  | $C_{ij}$ |  |  | $C_{jj}$ | $C_{Nj}$ |
| $S_N$ | $C_{1N}$ |  | $C_{iN}$ |  |  | $C_{jN}$ | $C_{NN}$ |

Les signaux sources numériques $s_i$ sont, de plus, simultanément appliqués à l'entrée d'un bloc 3 de détermination des moments $H_{ijk}$ d'ordre 3 des signaux sources, classiquement donnés par l'équation :

$$H_{ijk} = \frac{1}{m} \sum_{t=1}^{m} \left( s_i^t - \bar{s}_i \right)\left( s_j^t - \bar{s}_j \right)\left( s_k^t - \bar{s}_k \right)$$

avec

    i = 1,..., N
    j = 1,..., N
    k = 1,..., N

**4**

L'ensemble des moments $H_{ijk}$ d'ordre 3 des signaux sources peut être représenté sous la forme d'un tenseur H d'ordre 3, qui comporte N matrices-tranches $H_{[k]}$. Chaque matrice-tranche $H_{[k]}$ est alors constituée par une matrice, de taille NxN, de moments $(H_{[k]})_{ij} = H_{ijk}$, dans laquelle l'indice k étant fixé, les indices i et j varient chacun de 1 à N.

Les blocs 1 à 3 peuvent être réalisés de toute manière connue. Ils fournissent en entrée d'un bloc 4 respectivement le vecteur $\bar{s}$ de moments d'ordre 1, la matrice de covariance C et le tenseur H d'ordre 3, calculés à partir des signaux sources numériques $s_1$ à $s_N$.

Le dispositif doit déterminer les valeurs de w qui résolvent simultanément les équations suivantes :

- minimisation de la variance, c'est-à-dire du moment $m_2(w)$ d'ordre 2 centré, du signal composite,
- valeur moyenne, c'est-à-dire moment $m_1(w)$ d'ordre 1, du signal composite supérieure ou égale à un paramètre $\mu$, préalablement défini par l'utilisateur, et
- asymétrie, c'est-à-dire moment $m_3(w)$ d'ordre 3 du signal composite, supérieure ou égale à un paramètre h, préalablement défini par l'utilisateur,

dans lesquelles les moment $m_1(w)$, $m_2(w)$ et $m_3(w)$, respectivement d'ordre 1 à 3, du signal composite sont respectivement des fonctions linéaire, quadratique et cubique des coefficients de pondération.

En effet, le moment $m_1(w)$ d'ordre 1 peut s'écrire sous la forme:

$$m_1(w) = \sum_{i=1}^{N} w_i \bar{s}_i = \bar{s}^T w$$

Le moment $m_2(w)$ d'ordre 2 centré peut s'écrire sous la forme :

$$m_2(w) = \sum_{i=1}^{N} \sum_{j=1}^{N} w_i w_j C_{ij} = w^T C w$$

Le moment $m_2(w)$ d'ordre 3 peut s'écrire sous la forme :

$$m_3(w) = \sum_{i=1}^{N} \sum_{j=1}^{N} \sum_{k=1}^{N} w_i w_j w_k H_{ijk} = \left\langle w w^T, \sum_{k=1}^{N} w_k H_{[k]} \right\rangle$$

la notation $\left\langle X, Y \right\rangle = \sum_{i=1}^{N} \sum_{j=1}^{N} X_{ij} Y_{ij}$ représentant le produit scalaire entre deux matrices X et Y symétriques.

Les paramètres $\mu$ et h sont ainsi respectivement représentatifs des contraintes de valeur moyenne et d'asymétrie imposées au signal composite et le dispositif doit donc permettre la synthèse du signal composite avec un contrôle explicite de ses trois premiers moments.

Dans l'art antérieur, les moyens connus ne permettent d'obtenir que des solutions locales instables, dont le nombre croît exponentiellement avec le nombre N de signaux sources. En pratique, pour N supérieur à 10, il y a $2^{10}$ solutions, ce qui devient impossible à calculer dans des délais raisonnables.

Selon l'invention, une variable supplémentaire est introduite. Cette variable supplémentaire, inconnue supplémentaire à déterminer, est sous la forme d'une matrice de pondération W, semi-définie positive, de taille NxN. Elle est liée aux coefficients de pondération par l'inégalité suivante :

$$W - w w^T \geq 0$$

dans laquelle, $w^T$ étant le vecteur transposé de w, soit $w^T = [w_1 \ldots w_i \ldots w_N]$, $w w^T = [w_i w_j]$ représente la matrice du carré des coefficients de pondération ou matrice de rang 1 associée au vecteur w. Un élément $[w_i w_j]_{ij}$ de la matrice du carré des coefficients de pondération est ainsi donné par $[w_i w_j]_{ij} = w_i w_j$, pour i et j variant de 1 à N.

De manière connue, une matrice symétrique X, composées de nombres réels $X_{ij} = X_{ji}$, pour i et j variant de 1 à N, est dite semi-définie positive ($X \geq 0$) lorsque ses valeurs propres, c'est-à-dire les racines de son polynôme caractéristique, sont toutes positives ou nulles.

Sur la figure 1, le bloc 4 reçoit en entrée, non seulement les paramètres $\mu$ et h, mais également un vecteur de coefficients de pondération de référence $w_{ref}$ et un coefficient de régularisation K, qui sont également définis préalablement par l'utilisateur.

En effet, pour obtenir une solution stable, dans le bloc 4, la contrainte d'asymétrie (contrainte sur les moments d'ordre 3) sur le signal composite est, de plus, linéarisée autour du vecteur de coefficients de pondération de référence $w_{ref}$, constitué par un ensemble de coefficients de pondération de référence $w_{iref}$:

$$W_{ref} = \begin{bmatrix} W_{1ref} \\ \vdots \\ W_{iref} \\ \vdots \\ W_{Nref} \end{bmatrix}$$

Cette linéarisation utilise comme autre variable intermédiaire, à déterminer en sortie du bloc 4, une matrice $A = \begin{bmatrix} W & w \\ w^T & 1 \end{bmatrix}$, de taille (N+1)(N+1). Ce changement de variable est équivalente à une convexification du problème.

La contrainte d'asymétrie sur le signal composite est, de préférence, également linéarisée autour d'une matrice de pondération de référence $W_{ref} = w_{ref} \cdot w_{ref}^T$. Elle peut alors s'écrire :

$$\frac{1}{2}\left\langle W_{ref}, \sum_{k=1}^{N} w_k H_{[k]} \right\rangle + \left\langle W, \sum_{k=1}^{N} w_{kref} H_{[k]} \right\rangle \geq h$$

Dans le mode de réalisation particulier illustré sur la figure 1, le coefficient de régularisation K est introduit pour régulariser la variance du signal composite. La minimisation du moment $m_2(w)$ d'ordre 2 centré est alors remplacé par la minimisation de la somme suivante :

$$\langle W, C \rangle + \frac{K}{2}\left\{ \|W - W_{ref}\|_F^2 + 2\|w - w_{ref}\|^2 \right\}$$

dans laquelle la notation $\|X\|_F^2 = \langle X, X \rangle$ représente la norme associée à une matrice X et la notation $\|x\|^2 = x^T x$, la norme associée à un vecteur x. Le terme $K\left\{ \|W - W_{ref}\|_F^2 + 2\|w - w_{ref}\|^2 \right\}$ est un terme fortement convexe, toujours positif.

Ainsi, le problème de synthèse initial, ayant w comme variable, est remplacé par un problème de synthèse ayant w et W comme variables, par convexification de la contrainte sur le moment d'ordre 3 du signal composite, avec élévation de l'espace des variables w en matrices $W - ww^T$ semi-définies positives. L'introduction de la variable supplémentaire W permet ainsi de relâcher la contrainte sur le moment d'ordre 3 du signal composite et de la linéariser, c'est-à-dire de transformer une fonction initialement cubique en fonction linéaire des coefficients de pondération. Ceci réduit le nombre de solutions possibles et facilite la recherche de ces solutions et permet, dans des délais raisonnables, d'obtenir une solution stable, même en présence de perturbations des signaux sources.

Dans l'espace ainsi augmenté, le bloc 4 peut utiliser un programme de moindre carré semi-défini positif, de type connu, pour déterminer les valeurs de la variable A qui constituent des solutions à l'ensemble des contraintes à respecter. La recherche de ces solutions est, de préférence, réalisée par dualisation des contraintes linéaires (contraintes sur les moments d'ordre 1 et 3 du signal composite, $w_i \geq 0$ et $\sum_{i=1}^{N} w_i = 1$), puis en appliquant une méthode de type quasi-Newton sur le dual obtenu.

Le bloc 4 fournit les valeurs de A à un bloc 5 de détermination des coefficients de pondération, utilisant des méthodes de résolution classiques. Les signaux de sortie du bloc 5, représentatifs de w, et les signaux sources $S_1$ à $S_N$ sont fournis à un bloc 6, qui forme le signal composite s(w) désiré.

**Revendications**

1. Dispositif de synthèse d'un signal composite à partir d'une pluralité (N) de signaux numériques sources ($S_1$ à $S_N$) constitués par des échantillons ($S_i^t$) de mesure des signaux à traiter, comportant des moyens de détermination de coefficients de pondération à appliquer aux signaux numériques sources pour que le signal composite vérifie des contraintes de valeur moyenne et d'asymétrie prédéfinies par un utilisateur et dispose d'une variance minimale, dispositif **caractérisé en ce qu'**il comporte des moyens (1, 2, 3) de détermination des moments ($\bar{s}_i$, $C_{ij}$, $H_{ijk}$) d'ordre 1 à 3 des signaux numériques sources et des moyens (4, 5) de détermination des coefficients de pondération ($w_1$ à $w_N$) à partir desdits moments des signaux sources et des contraintes prédéfinies de valeur moyenne et d'asymétrie du signal composite, les moyens de détermination des coefficients de pondération comportant

   - des moyens (4) d'introduction d'une variable supplémentaire, sous forme d'une matrice de pondération W, telle que, w étant le vecteur des coefficients de pondération et $w^T$ le transposé du vecteur w, la différence W-$ww^T$ soit une matrice semi-définie positive, et
   - des moyens (4) de linéarisation, autour d'un vecteur $w_{ref}$ de coefficients de pondération de référence, de la contrainte d'asymétrie sur le signal composite en utilisant comme autre variable intermédiaire une matrice

$$A = \begin{bmatrix} W & w \\ w^T & 1 \end{bmatrix}.$$

2. Dispositif selon la revendication 1, **caractérisé en ce que** les moyens de linéarisation utilisent une matrice de pondération de référence $W_{ref} = w_{ref} \cdot w_{ref}^T$.

3. Dispositif selon l'une des revendications 1 et 2, **caractérisé en ce que** les moyens de détermination des coefficients de pondération comportent des moyens de régularisation de la variance du signal composite par un terme fortement convexe, toujours positif, $K \left\{ \left\| W - W_{ref} \right\|_F^2 + 2 \left\| w - w_{ref} \right\|^2 \right\}$, dans lequel K est un paramètre de régularisation prédéfini par l'utilisateur.

4. Dispositif selon selon l'une quelconque des revendication 1 à 3, **caractérisé en ce que** les moyens de détermination des coefficients de pondération comportent des moyens de recherche de l'autre variable intermédiaire A par dualisation des contraintes linéaires sur les coefficients de pondération et sur la valeur moyenne et l'asymétrie du signal composite.

5. Dispositif selon la revendication 4, **caractérisé en ce que** les moyens de recherche appliquent une méthode de type quasi-Newton sur le dual d'un programme de moindres carrés semi-définis.

Figure 1

**Office européen**
**des brevets**

**RAPPORT DE RECHERCHE EUROPEENNE**

Numéro de la demande

EP 06 35 4043

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EL GHAOUI L ET AL: "Worst-case value-at-risk and robust portfolio optimization: a conic programming approach" OPERATIONS RESEARCH, vol. 51, no. 4, juillet 2003 (2003-07), pages 543-556, XP002396254 * sections 1 et 2 * | 1-5 | INV. G06F17/10 |
| A | HARVEY C R ET AL: "Portfolio selection with higher moments" 13 décembre 2004 (2004-12-13), , XP002396259 Extrait de l'Internet: URL:http://papers.ssrn.com/sol3/papers.cfm?abstract_id=634141> [extrait le 2006-08-23] * section 1, deuxième paragraphe * * section 2.1 * | 1-5 | |
| D,A | ANGLIN J R ET AL: "Dynamics of a two-mode Bose-Einstein condensate beyond mean-field theory" PHYSICAL REVIEW A, vol. 64, no. 013605, 30 mai 2001 (2001-05-30), pages 1-9, XP002396255 * le document en entier * | 1-5 | DOMAINES TECHNIQUES RECHERCHES (IPC) G06F |

-/--

Le présent rapport a été établi pour toutes les revendications

| Lieu de la recherche | Date d'achèvement de la recherche | Examinateur |
|---|---|---|
| Berlin | 25 avril 2007 | DOMINGO VECCHIONI, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

## RAPPORT DE RECHERCHE EUROPEENNE

Numéro de la demande

EP 06 35 4043

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| D,A | ZHAO Z ET AL: "The reduced density matrix method for electronic structure calculations and the role of three-index representability" 16 octobre 2003 (2003-10-16), , XP002396260 Extrait de l'Internet: URL:http://www.optimization-online.org/DB_HTML/2003/10/760.html> [extrait le 2006-08-23] * le document en entier * ----- | 1-5 | |
| D,A | EL GHAOUI L ET AL: "A Cone Complementarity Linearization Algorithm for Static Output-Feedback and Related Problems" IEEE TRANSACTIONS ON AUTOMATIC CONTROL, vol. 42, no. 8, août 1997 (1997-08), pages 1171-1176, XP011000428 IEEE, USA ISSN: 0018-9286 * le document en entier * ----- | 1-5 | |
| D,A | MERTINS A: "Boundary Filter Optimization for Segmentation-Based Subband Coding" IEEE TRANSACTIONS ON SIGNAL PROCESSING, vol. 49, no. 8, août 2001 (2001-08), pages 1718-1727, XP011059373 IEEE, USA ISSN: 1053-587X * le document en entier * ----- -/-- | 1-5 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Berlin | 25 avril 2007 | DOMINGO VECCHIONI, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen**
**des brevets**

**RAPPORT DE RECHERCHE EUROPEENNE**

Numéro de la demande

EP 06 35 4043

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ALMGREN R F: "Optimal execution with nonlinear impact functions and trading-enhanced risk" octobre 2001 (2001-10), , XP002396261 Extrait de l'Internet: URL:www.math.toronto.edu/almgren/papers/nonlin.pdf> [extrait le 2006-08-23] ----- | 1-5 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Berlin | 25 avril 2007 | DOMINGO VECCHIONI, M |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

   ................................................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.R. ANGLIN et al.** Dynamics of a two-mode Bose-Einstein condensate beyond mean field theory. *ITAMP, Harvard-Smithsonian Center for Astrophysics,* 25 Octobre 2005
- **Z. ZHAO et al.** The Reduced Density Matrix Method for Electronic Structure Calculations and the Role of Three-Index Representability. *Journal of Chemical Physics,* 2004, vol. 120, 2095-2104
- **L. EL GHAOUI ; F. OUSTRY ; M. AÏT RAMI.** A cone complementary linearization algorithm for static output-feedback and related problems. *IEEE Trans. Autom. & Control,* Août 1997, vol. 42 (8
- **ALFRED MERTINS.** Boundary filter optimization for segmentation-based subband coding. *IEEE Trans. Signal Processing,* Août 2001, vol. 49 (8), 1718-1727